(19) **Europäisches Patentamt / European Patent Office / Office européen des brevets**

(11) **EP 3 697 660 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **18788743.5**

(22) Anmeldetag: **15.10.2018**

(51) Internationale Patentklassifikation (IPC):
**B60W 40/068** *(2012.01)* **B60K 1/02** *(2006.01)*
**B60K 7/00** *(2006.01)*

(52) Gemeinsame Patentklassifikation (CPC):
**B60W 40/068; B60K 7/0007;** B60K 2007/0092;
B60W 2520/10; B60W 2520/14; B60W 2520/26;
B60W 2520/28; B60W 2520/30; B60W 2720/30

(86) Internationale Anmeldenummer:
**PCT/EP2018/078105**

(87) Internationale Veröffentlichungsnummer:
**WO 2019/076828 (25.04.2019 Gazette 2019/17)**

(54) **VERFAHREN ZUR BESTIMMUNG EINES REIBUNGSKOEFFIZIENTEN ZWISCHEN EINEM RAD EINES KRAFTFAHRZEUGES UND EINER STRASSENOBERFLÄCHE MIT TORQUE VECTORING**

METHOD FOR DETERMINING A FRICTION COEFFICIENT BETWEEN A WHEEL OF A MOTOR VEHICLE AND A ROAD SURFACE WITH TORQUE VECTORING

PROCÉDÉ PERMETTANT DE DÉTERMINER UN COEFFICIENT DE FROTTEMENT ENTRE UNE ROUE D'UN VÉHICULE AUTOMOBILE ET LA SURFACE D'UNE CHAUSSÉE À L'AIDE DE VECTEURS DE COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2017 DE 102017124317**

(43) Veröffentlichungstag der Anmeldung:
**26.08.2020 Patentblatt 2020/35**

(73) Patentinhaber:
• **thyssenkrupp Presta AG**
  **9492 Eschen (LI)**
• **thyssenkrupp AG**
  **45143 Essen (DE)**

(72) Erfinder:
• **LAPIS, Leonard**
  **9466 Sennwald (CH)**
• **POLMANS, Kristof**
  **6464 Tarrenz (AT)**

(74) Vertreter: **thyssenkrupp Intellectual Property GmbH**
  **ThyssenKrupp Allee 1**
  **45143 Essen (DE)**

(56) Entgegenhaltungen:
EP-A1- 2 351 678     EP-A1- 3 106 360
WO-A2-2008/028697   WO-A2-2009/060075
DE-A1- 102013 011 883   US-A1- 2012 179 327

• **FACHBEREICH MASCHINENBAU DEM ET AL: "Verbesserungspotenzial von Stabilisierungssystemen im Pkw durch eine Reibwertsensorik", 21 December 2004 (2004-12-21), XP093177962, Retrieved from the Internet <URL:https://tuprints.ulb.tu-darmstadt.de/id/eprint/902>**

**Beschreibung**

Die vorliegende Erfindung betrifft ein Verfahren zur Bestimmung eines Reibungskoeffizienten zwischen einem Rad eines Kraftfahrzeuges und einer Straßenoberfläche mit den Merkmalen des Oberbegriffs des Anspruchs 1 und einem Steer-by-Wire-Lenksystem eines Kraftfahrzeuges mit den Merkmalen des Oberbegriffs des Anspruchs 8.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt.

Um instabile Fahrsituationen, wie Übersteuern oder Untersteuern zu vermeiden, ist das sogenannte "Torque Vectoring" bekannt, bei dem ein Antriebsmoment zwischen einem linken und einem rechten Fahrzeugrad mittels eines speziell ausgebildeten Differenzialgetriebes verteilt wird, um auf diese Weise dem Untersteuern oder Übersteuern entgegenzuwirken. So wird bei einer instabilen Fahrsituation ein Rad abgebremst, während die Antriebskraft an das Rad geleitet wird, welches die größte Giermomentreduktion aufweist, das heißt, kommt es zum Untersteuern, beaufschlagt die Steuerung das kurvenäußere Rad über eine separate Kupplung mit mehr Antriebskraft, sodass das Fahrzeug in die Kurve "hineingeschoben" wird.

Der Reibungskoeffizient zwischen der Fahrbahn und den Rädern wird zur Steuerung der Fahrdynamik und der Fahrerassistenzsysteme benötigt. Durch die Ermittlung des Reibungskoeffizienten können beispielsweise ABS-Systeme und Antischlupf-Regelsysteme besonders genau geregelt werden. Es ist bekannt, den Reibungskoeffizienten zwischen den Rädern und der Fahrbahn über ein Schätzverfahren zu ermitteln, in welchem die Querdynamik oder Längsdynamik des Fahrzeugs betrachtet wird. Ein solches Verfahren wird beispielsweise in der Schrift DE 10 2007 007 282 A1 offenbart. Dabei wird ein Kraftschluss achsindividuell aus in einem Modell ermittelten Seitenkräften und Achslasten, und der Reibwert der Fahrbahn über einen Vergleich der beiden Kraftschlüsse geschätzt.

Aus EP 3 106 360 A1 ist ein Verfahren zum Schätzen eines Reibwertes bekannt, bei dem ein positives Drehmoment auf beide Räder einer ersten Achse und ein entgegengesetztes, negatives Drehmoment auf beide Räder einer zweiten Achse aufgebracht wird. In diesem Zustand werden die Reifenumlaufgeschwindigkeiten gemessen und die Reifenkräfte geschätzt. Der Reibwert zwischen den Reifen und der Fahrbahn wird aus diesen Größen anhand eines Reifenmodells geschätzt. Das aufgebrachte Drehmoment wird reduziert, sobald die Ausnutzung der Reibung zu nahe an einem angenommenen maximalen Reibwert liegt.

EP 2 351 678 A1 beschreibt ein Verfahren zum Schätzen eines Reibzustands einer Fahrbahn mit der ein Fahrzeug in Kontakt steht. Als Ausgangsgröße wird ein Griffigkeitskennwert in Abhängigkeit zweier Eingangsgrößen bestimmt, die ein Verhältnis aus einer auf einen Reifen wirkenden Kraft und einem Schlupfgrad in zwei unterschiedlichen Richtungen sind, bestimmt.

DE 10 2013 011 883 A1 betrifft ein Verfahren zum Betreiben der Lenkung eines Kraftfahrzeugs, bei dem die Radantriebsmomente auf die lenkbaren Räder derart verteilt werden, dass eine Verringerung der Differenz zwischen einem Ist-Lenkwinkel und einem Soll-Lenkwinkel erfolgt. Der lenkbaren Achse sind Einzelradantriebe zugeordnet.

WO 2008/028697 A2 betrifft ein Verfahren zur Überwachung des Rauschens eines Sensors und dessen Anwendung im Fahrzeugbereich zum Ermitteln eines Reibwertes zwischen Reifen eines Kraftfahrzeuges und einer Straßenoberfläche.

WO 2009/060075 A2 beschreibt ein Verfahren zum Ermitteln eines Reibwerts zwischen einem Kraftfahrzeugreifen und der Oberfläche einer Fahrbahn, bei dem aus einem ersten und einem zweiten Reibwertparameter der Reibwert mit einem rekursiven Schätzalgorithmus ermittelt wird. Der erste Reibwertparameter wird unter Verwendung eines Modells ermittelt, in dem ein funktionaler Zusammenhang zwischen dem ersten Reibwertparameter und einem Schlupf des Kraftfahrzeugreifens vorgegeben ist. Der zweite Reibwertparameter wird aus dem Quotienten zwischen einer Längskraft und einer Aufstandskraft des Kraftfahrzeugreifens ermittelt.

Die Dissertation "Verbesserungspotenzial von Stabilisierungssystemen im Pkw durch eine Reibwertsensorik" von Dipl.-Ing. Ingo Weber, TU Darmstadt, 21.12.2004 befasst sich u.a. mit der Reibwertermittlung im Fahrzeug und stellt verschiedene Möglichkeiten zur Schätzung des aktuell in Anspruch genommenen Reibwertes auf Basis fahrzeuginterner Zustandsgrößen und zur Reibwerterfassung mittels Sensoren vor.

Es ist Aufgabe der vorliegenden Erfindung, ein verbessertes Verfahren und ein Steer-by-Wire-Lenksystem zum Ermitteln des Reibungskoeffizienten zwischen einem Fahrzeugrad und einer Fahrbahnoberfläche anzugeben, mit denen der Reibungskoeffizient genauer, einfacher und zuverlässiger bestimmt werden kann.

Diese Aufgabe wird von einem Verfahren zur Bestimmung eines Reibungskoeffizienten zwischen einem Rad eines Kraftfahrzeuges und einer Straßenoberfläche mit den Merkmalen des Anspruchs 1 und einem Steer-by-Wire-Lenksystem eines Kraftfahrzeuges mit den Merkmalen des Anspruchs 7 gelöst.

Demnach ist ein Verfahren zur Bestimmung eines Reibungskoeffizienten zwischen einem lenkbaren Rad eines Kraftfahrzeuges und einer Straßenoberfläche vorgesehen, wobei das Kraftfahrzeug einen Einzelradantrieb aufweist, der dazu ausgebildet ist, das lenkbare

Rad unabhängig von dem wenigstens einem anderen lenkbaren Rad des Kraftfahrzeuges anzutreiben, wobei Radantriebsmotoren (15, 150) jeweils über Antriebswellen (27) mit den lenkbaren Rädern (7, 70) verbunden sind und es sich bei den Radantriebsmotoren (15, 150) um Elektromotoren handelt.

Das Verfahren umfasst folgende Schritte:

- Aufbringen eines Rad-Antriebsmomentes durch den Einzelradantrieb auf das Rad des Kraftfahrzeuges, derart, dass das Rad in Schlupf gebracht wird, und
- Bestimmen des Reibungskoeffizienten mittels des Reibungsmomentes, das sich aus der Differenz des Rad-Antriebsmomentes und eines Trägheitsmomentes des Rades ergibt.

Mit diesem Verfahren kann der Reibungskoeffizient zwischen der Fahrbahnoberfläche und dem Fahrzeugrad einfach, genau und zuverlässig bestimmt werden. Eine Schätzung ist nicht notwendig.

Erfindungsgemäß wird aus dem Reibungsmoment die in Fahrtrichtung auf das Rad wirkende Kraft mittels des Zusammenhangs $F_X = \dfrac{M_{Reibung}}{r_{Rad}}$ bestimmt, wobei $r_{Rad}$ der Radius des Fahrzeugrads ist. Diese Kraft geht dann in die Berechnung des Reibungskoeffizienten ein und zwar derart, dass sich der Reibungskoeffizient aus dem Quotienten aus der in Fahrtrichtung auf das Rad wirkenden Kraft und einer Normalkraft ergibt.

Bevorzugt liegt der Schlupf zur Bestimmung des Reibungskoeffizienten in einem Bereich zwischen 0,1 und 0,8.

Vorzugsweise liegt die Zeitdauer des Schlupfs in einem Bereich zwischen 0,1s und 0,3s.

Dabei ist es vorteilhaft, wenn das Rad-Antriebsmoment auf das Rad aufgebracht wird, ohne die Fahrzeugrichtung dabei zu verändern.

Erfindungsgemäß geht dem Aufbringen des Rad-Antriebsmomentes auf das Rad des Kraftfahrzeuges eine stabile Geradeausfahrt des Kraftfahrzeuges mit einer konstanten Geschwindigkeit und einer Gierrate, die einen vordefinierten Wert nicht überschreitet, voraus.

Dabei ist es denkbar und möglich, dass die Geradeausfahrt mit konstanter Geschwindigkeit durch das vorhandene Lenk-und Bremssystem unterstützt wird. Dadurch können Fahrzeugreaktionen ausgeblendet werden, sodass der Reibwert des Fahrzeugrads identifiziert werden kann.

Diese stabile Geradeausfahrt ist bevorzugt für eine Zeitdauer von mehr als 5s gegeben.

In einer vorteilhaften Ausführungsform wird der Reibungskoeffizient zwischen einem Maximalwert und einem Minimalwert bestimmt und auf den Maximalwert oder den Minimalwert gesetzt, je nachdem welcher der beiden Werte näher an dem Reibungskoeffizienten liegt. Vorzugsweise ist der Maximalwert 1,2 und der Minimalwert 0,3. Das Verfahren kann sequentiell ausgeführt werden, damit während der Fahrt stets aktuelle Reibwerte bereitgestellt werden können.

Erfindungsgemäß ist ein Steer-by-Wire-Lenksystem eines Kraftfahrzeuges mit einer zwei lenkbare Räder aufweisenden lenkbaren Vorderradachse vorgesehen, wobei die Vorderradachse einen Einzelradantrieb aufweist, der mittels einer Antriebssteuerung den lenkbaren Rädern zugeordnete Radantriebe einzeln antreibt, und wobei die Antriebssteuerung derart ausgebildet ist, das zuvor beschriebene Verfahren zur Bestimmung des Reibungskoeffizienten auszuführen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:

Fig. 1: eine schematische Darstellung eines Steer-by-Wire-Lenksystems mit zwei separaten Radantrieben auf der Vorderachse,

Fig. 2: eine schematische Darstellung eines Steer-by-Wire-Lenksystems in Draufsicht, sowie

Fig. 3: eine schematische Darstellung der auf die Räder wirkenden Kräfte zur Bestimmung des Reibwertes zwischen der Fahrbahn und den Rädern.

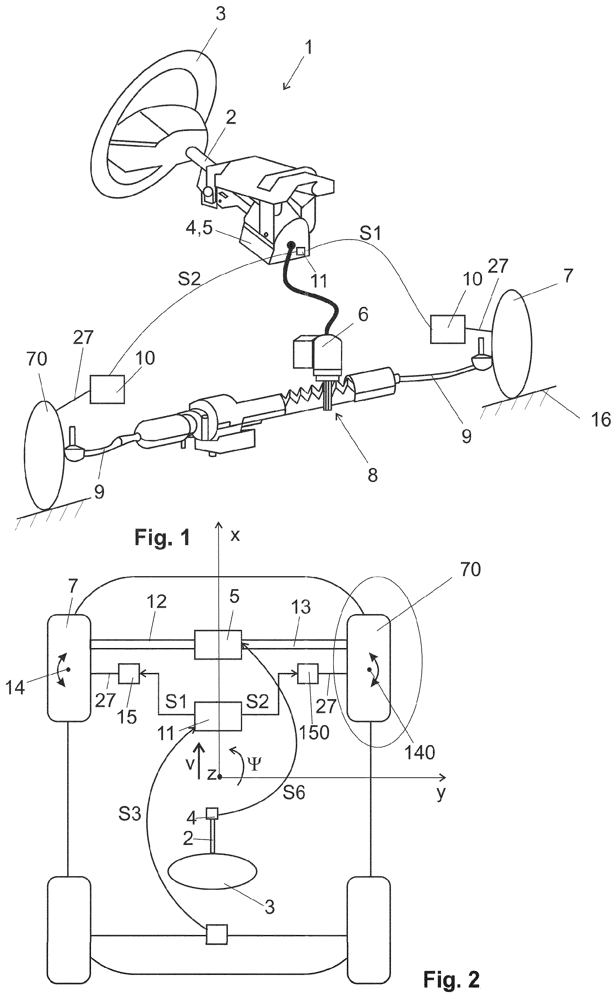

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Des Weiteren ist an der Lenkwelle 2 ein Feedback-Aktuator 4 angebracht, welcher dazu dient, die Rückwirkungen von der Fahrbahn auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an eine Lenkungssteuereinheit 5 weitergegeben, die in Abhängigkeit von weiteren Eingangsgrößen einen elektrischen Lenksteller 6 ansteuert, welcher die Stellung der gelenkten Räder 7,70 steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 7,70. Den lenkbaren Rädern 7,70 sind Antriebsmotoren 10 zugeordnet, die die Räder 7,70 in Form eines Einzelradantriebs separat antreiben. Eine Antriebssteuerung 11 bestimmt anhand des vom Drehwinkelsensor gemessenen Drehwinkels der Lenkwelle 2 und weiterer Signale die Antriebsmomente für die lenkbaren Räder 7,70 und steuert den jeweiligen Antriebsmotor 10 entsprechend an.

In Figur 2 ist schematisch das Kraftfahrzeug mit den beiden Achsen dargestellt, wobei der Antrieb der lenkbaren Räder 7,70 auf der Vorderachse 12 angeordnet ist. Die Vorderachse 12 umfasst bezogen auf eine Fahrtrichtung ein linkes lenkbares Rad 7 und ein rechtes lenkbares Rad 70, die über die Zahnstange 13 des Zahnstangenlenkgetriebes miteinander verbunden sind. Bei Verlagerung der Zahnstange 13 quer zur Fahrtrichtung nach rechts oder links werden die Räder um einen jeweiligen Schwenkpunkt 14, 140 verschwenkt. Ein linker Antriebsmotor 15 ist in Fahrtrichtung links und ein rechter Antriebsmotor 150 ist in Fahrtrichtung rechts angeordnet. Die Radantriebsmotoren 15, 150 sind jeweils über Antriebswellen 27 mit den lenkbaren Rädern 7,70 verbunden. Bei den Radantriebsmotoren 15, 150 handelt es sich um Elektromotoren. Die Antriebssteuerung 11 steuert über eine erste Signalleitung S1 den linken Antriebsmotor 15 und über eine zweite Signalleitung S2 den rechten Antriebsmotor 150 an. Die Antriebssteuerung 11 empfängt zudem Informationen über den Zustand der Hinterachse über eine Signalleitung S3 geleitet. Das Fahrzeug bewegt sich in Fahrtrichtung x mit einer Geschwindigkeit v und um die Hochachse mit einer Winkelgeschwindigkeit Ψ (Gierrate).

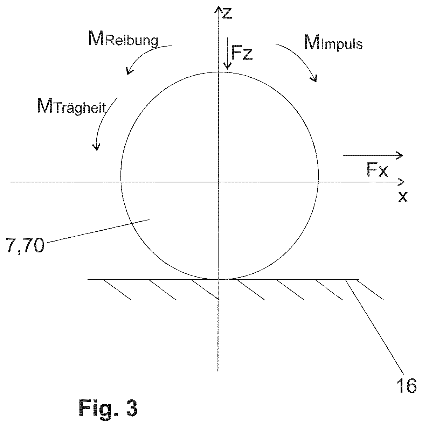

In Figur 3 ist die Bestimmung des Reibungskoeffizienten dargestellt. Bei Geradeausfahrt des Fahrzeuges in x-Richtung mit einer konstanten Geschwindigkeit v wird wenigstens einem Fahrzeugrad 7,70 kurzzeitig ein Rad-Antriebsmoment $M_{Impuls}$ aufgeprägt ohne die Fahrzeugrichtung dabei zu verändern. Dabei wird das Rad 7,70 beschleunigt oder abgebremst und zwar derart, dass es in Schlupf gebracht wird. Wird beispielsweise das vordere rechte Fahrzeugrad in Schlupf gebracht, so muss, um die Fahrzeugrichtung nicht zu verändern, die Gierrate und die Längsbeschleunigung des Fahrzeugrads um den Wert 0 liegen. Es wird dann über das Abbremsen und über Lenkoperationen eine entsprechende Längskraft, sowie ein entsprechendes Giermoment in die entgegengesetzte Drehrichtung des vorderen rechten Fahrzeugrads auf ein anderes oder mehrere andere Fahrzeugräder als das rechte Fahrzeugrad aufgebracht. In Figur 3 ist das Beispiel einer Beschleunigung dargestellt. Unter dem Begriff "Schlupf" wird der Zustand verstanden, wenn sich beim Beschleunigen oder Abbremsen des Fahrzeugrades 7,70 die Oberflächengeschwindigkeit des Rades von der Fahrzeuggeschwindigkeit v unterscheidet. Der Schlupf ist dabei der Betrag des Quotienten aus der Differenz zwischen der Oberflächengeschwindigkeit des Rades 7,70 und der Fahrzeuggeschwindigkeit v. Der Schlupf ist somit 1 wenn das Rad blockiert ist. Vorzugsweise liegt der Schlupf zur Bestimmung des Reibwertes in einem Bereich zwischen 0,1 und 0,8. Dem Schlupf geht eine stabile Geradeausfahrt mit einer konstanten Geschwindigkeit und einer Gierrate, die einen vordefinierten Wert, beispielsweise 0,05°/s, nicht überschreitet voraus. Dieser Zustand ist bevorzugt für eine Zeitdauer von mehr als 5s gegeben. Der darauf folgende Schlupf hat eine Zeitdauer, die bevorzugt in einem Bereich zwischen 0,1s und 0,3s liegt. Über das kurzzeitige Rad-Antriebsmoment lässt sich der Reibungskoeffizient µ zwischen dem Rad und der

Straßenoberfläche ermitteln: $\mu = \dfrac{F_X}{F_Z}$ , wobei $F_X$ die in x-Richtung wirkende Kraft ist und $F_Z$ die senkrecht dazu wirkende Normalkraft ist. $F_X$ ist gegeben durch:

$$F_X = \frac{M_{Reibung}}{r_{Rad}}$$ , wobei $M_{Reibung}$ das Reibungsmoment ist und $r_{Rad}$ der Radius des Rades ist. $M_{Reibung}$ ist weiterhin definiert durch:

$M_{Reibung} = M_{Impuls} - M_{Trägheit}$, wobei $M_{Trägheit}$ das Trägheitsdrehmoment ist.

Da das Trägheitsmoment rotierender Masse und die Normalkraft (bei stabiler Geradeausfahrt) auf dem angetriebenen Rad bekannt und konstant sind, kann das Reibungsmoment $M_{Reibung}$ und daraus der Reibungskoeffizient µ zwischen dem Rad und der Straßenoberfläche 16 bestimmt werden. Genauer, das Fahrzeug fährt mit konstanter Fahrzeuggeschwindigkeit, es gibt keinen dynamischen Lastwechsel und die Normalkraft entspricht dabei dem Wert im Stillzustand des Fahrzeugs. Die statische Gewichtsverteilung und Massenverteilung sind bekannt. Das Trägheitsdrehmoment ist definiert durch:

$M_{Trägheit} = T_{Trägheit} * \alpha_{Rad}$, wobei $T_{Trägheit}$ das Trägheitsmoment ist und $\alpha_{Rad}$ die Radwinkelbeschleunigung ist, welche aus der gemessenen Radwinkelgeschwindigkeit ermittelt wird.

Der Reibungskoeffizient wird bevorzugt zwischen einem Maximalwert und einem Minimalwert bestimmt. In einem Ausführungsbeispiel ist der Maximalwert 1,2 und der Minimalwert 0,3. Nach der Bestimmung des Reibungskoeffizienten wird dieser für die weitere Verwendung auf den Maximalwert oder den Minimalwert gesetzt, je nachdem welcher der beiden Werte näher dran liegt.

Der somit definierte Reibungskoeffizient kann in elektromechanischen Servolenkungen und/oder Steer-by-Wire Lenkungen verwendet werden, zum Beispiel zur:

• Einstellung des Lenkgefühls in Steer-by-Wire Lenkungen,

• Schätzung des Fahrzustandes,

- Ergänzung optischer Reibwerterkennung,

- Bestimmung von zulässigen Lenkoperationen (z.B. bei einem autonom fahrenden Fahrzeug, Lane-Keeping, usw.).

Zur Verbesserung der Genauigkeit der Bestimmung des Reibungskoeffizienten kann zusätzlich ein Reifenmodell verwendet werden.

**Patentansprüche**

1. Verfahren zur Bestimmung eines Reibungskoeffizienten ($\mu$) zwischen einem lenkbaren Rad (7,70) eines Kraftfahrzeuges und einer Straßenoberfläche (16), wobei das Kraftfahrzeug einen Einzelradantrieb aufweist, der dazu ausgebildet ist, das lenkbare Rad (7,70) unabhängig von wenigstens einem anderen lenkbaren Rad (7,70) des Kraftfahrzeuges anzutreiben, wobei Radantriebsmotoren (15, 150) jeweils über Antriebswellen (27) mit den lenkbaren Rädern (7, 70) verbunden sind und es sich bei den Radantriebsmotoren (15, 150) um Elektromotoren handelt, **dadurch gekennzeichnet, dass** folgende Verfahrensschritte vorgesehen sind:

   • Aufbringen eines Rad-Antriebsmomentes ($M_{Impuls}$) durch den Einzelradantrieb auf das Rad (7,70) des Kraftfahrzeuges, derart, dass das Rad (7,70) in Schlupf gebracht wird, und
   • Bestimmen des Reibungskoeffizienten ($\mu$) mittels des Reibungsmomentes ($M_{Reibung}$), das sich aus der Differenz des Rad-Antriebsmomentes ($M_{Impuls}$) und eines Trägheitsdrehmomentes ($M_{Trägheit}$) des Rades (7,70) nach der Formel

$$\mu = \frac{F_X}{F_Z} = \frac{M_{Impuls} - M_{Trägheit}}{r_{Rad} * F_Z}$$

   ergibt, wobei $r_{Rad}$ der Radius des Rads (7, 70), $F_X$ die in Fahrtrichtung auf das Rad wirkende Kraft und $F_Z$ die Normalkraft ist, und wobei das Trägheitsdrehmoment ($M_{Trägheit}$) definiert ist durch $M_{Trägheit} = T_{Trägheit} * \alpha_{Rad}$, wobei $T_{Trägheit}$ das Trägheitsmoment und $\alpha_{Rad}$ die Radwinkelbeschleunigung ist, welche aus einer gemessenen Radwinkelgeschwindigkeit ermittelt wird,
   wobei dem Aufbringen des Rad-Antriebsmomentes ($M_{Impuls}$) auf das Rad (7,70) des Kraftfahrzeuges eine stabile Geradeausfahrt des Kraftfahrzeuges mit einer konstanten Geschwindigkeit und einer Gierrate, die einen vordefinierten Wert nicht überschreitet, vorausgeht.

2. Verfahren nach Anspruch 1, **dadurch gekennzeichnet, dass** der Schlupf zur Bestimmung des Reibungskoeffizienten ($\mu$) in einem Bereich zwischen 0,1 und 0,8 liegt.

3. Verfahren nach einem der vorhergehenden Ansprüche, **dadurch gekennzeichnet, dass** das Rad (7, 70) über eine definierte Zeitdauer in Schlupf gebracht wird, die in einem Bereich zwischen 0,1s und 0,3s liegt.

4. Verfahren nach einem der Ansprüche 1 bis 3, **dadurch gekennzeichnet, dass** die stabile Geradeausfahrt bevorzugt für eine Zeitdauer von mehr als 5s gegeben ist.

5. Verfahren nach einem der vorhergehenden Ansprüche, **dadurch gekennzeichnet, dass** der Reibungskoeffizient ($\mu$) zwischen einem Maximalwert und einem Minimalwert bestimmt wird und der Reibungskoeffizient ($\mu$) auf den Maximalwert oder den Minimalwert gesetzt wird, je nachdem welcher der beiden Werte näher an dem Reibungskoeffizienten liegt.

6. Verfahren nach Anspruch 5, **dadurch gekennzeichnet, dass** der Maximalwert 1,2 und der Minimalwert 0,3 ist.

7. Steer-by-Wire-Lenksystem eines Kraftfahrzeuges mit einer zwei lenkbare Räder (7,70) aufweisenden lenkbaren Vorderradachse (12), wobei die Vorderradachse (12) einen Einzelradantrieb aufweist, der mittels einer Antriebssteuerung (11) den lenkbaren Rädern (7,70) zugeordnete Radantriebe (15,150) einzeln antreibt, **dadurch gekennzeichnet, dass** die Antriebssteuerung (11) dazu ausgebildet ist, das Verfahren nach einem der Ansprüche 1 bis 6 auszuführen.

**Claims**

1. Method for determining a coefficient of friction ($\mu$) between a steerable wheel (7, 70) of a motor vehicle and a road surface (16), wherein the motor vehicle has an individual wheel drive which is designed to drive the steerable wheel (7, 70) independently of at least one other steerable wheel (7, 70) of the motor vehicle, wherein wheel drive motors (15, 150) are connected to the steerable wheels (7, 70) via drive shafts (27) and the wheel drive motors (15, 150) are electric motors, **characterised in that** the following process steps are provided:

   · Applying a wheel drive torque ($M_{Impuls}$) to the wheel (7, 70) of the motor vehicle by means of the individual wheel drive in such a way that the wheel (7, 70) is brought into slip, and
   · determining the coefficient of friction ($\mu$) by means of the friction torque ($M_{Reibung}$), which is calculated from the difference between the wheel drive torque ($M_{Impuls}$) and an inertia torque ($M_{Trägheit}$) of the wheel (7, 70) according to the formula

$$\mu = \frac{F_X}{F_Z} = \frac{M_{Impuls} - M_{Trägheit}}{r_{Rad} * F_Z}$$

   where $r_{Rad}$ is the radius of the wheel (7, 70), $F_X$ is the force acting on the wheel in the direction of travel, and $F_Z$ is the normal force, and wherein the moment of inertia ($M_{Trägheit}$) is defined by
   $M_{Trägheit} = T_{Trägheit} * \alpha_{Rad}$, wherein $T_{Trägheit}$ is the moment of inertia and $\alpha_{Rad}$ is the wheel angular acceleration, which is determined from a measured wheel angular velocity,
   wherein the application of the wheel drive torque ($M_{Impuls}$) to the wheel (7, 70) of the motor vehicle is preceded by stable straight-line travel of the motor vehicle at a constant speed and a yaw rate that does not exceed a predefined value.

2. Method according to claim 1, **characterised in that** the slip for determining the coefficient of friction ($\mu$) is in a range between 0.1 and 0.8.

3. Method according to one of the preceding claims, **characterised in that** the wheel (7, 70) is brought into slip for a defined period of time, which is in a range between 0.1 s and 0.3 s.

4. Method according to one of claims 1 to 3, **characterised in that** the stable straight-line travel is preferably maintained for a period of more than 5 seconds.

5. Method according to one of the preceding claims, **characterised in that** the coefficient of friction ($\mu$) is determined between a maximum value and a minimum value and the coefficient of friction ($\mu$) is set to the maximum value or the minimum value, depending on which of the two values is closer to the coefficient of friction.

6. Method according to claim 5, **characterised in that** the maximum value is 1.2 and the minimum value is 0.3.

7. Steer-by-wire steering system for a motor vehicle with a steerable front axle (12) having two steerable wheels (7, 70), wherein the front axle (12) has an individual wheel drive which, by means of a drive control (11), individually drives the wheel drives (15, 150) assigned to the steerable wheels (7, 70), **characterised in that** the drive control (11) is designed to execute the method according to one of claims 1 to 6.

**Revendications**

1. Procédé pour déterminer un coefficient de frottement ($\mu$) entre une roue directrice (7, 70) d'un véhicule automobile et une surface de route (16), le véhicule automobile comportant un entraînement individuel des roues qui est conçu pour entraîner la roue directrice (7, 70) indépendamment d'au moins une autre roue directrice (7, 70) du véhicule automobile, les moteurs d'entraînement des roues (15, 150) étant reliés aux roues directrices (7, 70) par des arbres d'entraînement (27) et les moteurs d'entraînement des roues (15, 150) étant des moteurs électriques, **caractérisé en ce que** les étapes suivantes sont prévues :

   · application d'un couple d'entraînement de roue ($M_{Impuls}$) par l'entraînement individuel des roues sur la roue (7, 70) du véhicule automobile, de telle sorte que la roue (7, 70) soit mise en patinage, et

· détermination du coefficient de frottement ($\mu$) à l'aide du couple de frottement ($M_{Reibung}$), qui est donné par la différence entre le couple d'entraînement de roue ($M_{Impuls}$) et un couple d'inertie ($M_{Trägheit}$) de la roue (7, 70) selon la formule

$$\mu = \frac{F_X}{F_Z} = \frac{M_{Impuls} - M_{Trägheit}}{r_{Rad} * F_Z}$$

où $r_{Rad}$ est le rayon de la roue (7, 70) et $F_Z$ est la force normale, et le moment d'inertie ($M_{Trägheit}$) étant défini par

$M_{Trägheit} = T_{Trägheit} * \alpha_{Rad}$, où $T_{Trägheit}$ est le moment d'inertie, $F_X$ est la force qui agit sur la roue dans le sens de la marche et $\alpha_{Rad}$ est l'accélération angulaire de la roue qui est déterminée à partir d'une vitesse angulaire mesurée de la roue,

l'application du couple d'entraînement de roue ($M_{Impuls}$) à la roue (7, 70) du véhicule automobile étant précédée d'une conduite en ligne droite stable du véhicule automobile à une vitesse constante et avec un taux de lacet qui ne dépasse pas une valeur prédéfinie.

2. Procédé selon la revendication 1, **caractérisé en ce que** le glissement pour déterminer le coefficient de frottement ($\mu$) se situe dans une plage comprise entre 0,1 et 0,8.

3. Procédé selon l'une des revendications précédentes, **caractérisé en ce que** la roue (7, 70) est mise en patinage pendant une durée définie comprise entre 0,1 s et 0,3 s.

4. Procédé selon l'une des revendications 1 à 3, **caractérisé en ce que** la conduite en ligne droite stable est de préférence assurée pendant une durée supérieure à 5 s.

5. Procédé selon l'une des revendications précédentes, **caractérisé en ce que** le coefficient de frottement ($\mu$) est déterminé entre une valeur maximale et une valeur minimale et que le coefficient de frottement ($\mu$) est réglé sur la valeur maximale ou la valeur minimale, selon celle des deux valeurs qui est la plus proche du coefficient de frottement.

6. Procédé selon la revendication 5, **caractérisé en ce que** la valeur maximale est de 1,2 et la valeur minimale est de 0,3.

7. Système de direction à commande électrique d'un véhicule automobile comprenant un essieu avant directeur (12) comportant deux roues directrices (7, 70), l'essieu avant (12) comportant un entraînement individuel des roues qui, au moyen d'une commande d'entraînement (11), entraîne individuellement les entraînements de roue (15, 150) associés aux roues directrices (7, 70), **caractérisé en ce que** la commande d'entraînement (11) est conçue pour exécuter le procédé selon l'une des revendications 1 à 6.

**Fig. 1**

**Fig. 2**

M$_{Reibung}$

M$_{Impuls}$

M$_{Trägheit}$

$F_z$

$F_x$

z

x

7,70

16

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007282 A1
- EP 3106360 A1
- EP 2351678 A1
- DE 102013011883 A1
- WO 2008028697 A2
- WO 2009060075 A2

**In der Beschreibung aufgeführte Nicht-Patentliteratur**

- *Verbesserungspotenzial von Stabilisierungssystemen im Pkw durch eine Reibwertsensorik*, 21 December 2004